# EUROPEAN PATENT APPLICATION

(11) **EP 4 768 237 A1**
(43) Date of publication of application: **01.07.2026**
(21) Application number: 25383559.9
(22) Date of filing: 29.12.2025
(51) Int. Cl.: B29D 35/00, B29D 35/14, A43B 17/00

(54) **METHOD AND MOLD FOR MANUFACTURING AN ANATOMICAL FOOTWEAR INSOLE, AND ANATOMICAL FOOTWEAR INSOLE MANUFACTURED BY MEANS OF SAID METHOD IN SAID MOLD**

(30) Priority: 30.12.2024 ES 202431115
(71) Applicant: Proinvex Urban S.L., 03203 Elche - Alicante (ES)
(72) Inventor: URBAN BRU, Francisco Manuel, 03203 ELCHE (Alicante) (ES)
(74) Representative: Herrero & Asociados, S.L.

(57) **Abstract**

The method comprises: placing a sheet (2) in a mold; closing the mold, tensioning said sheet (2); injecting a first material into a perimeter ring (5) formed in the mold; forming a perimeter edge (3) around said sheet (2), defining an interior space; injecting a second material into the interior space; and vulcanizing the second material, forming a footwear insole (1) comprising the perimeter edge (3) of the first material and an interior part (4) of the second material.

The footwear insole comprises a first and second materials and a sheet (2), wherein the first material forms only a perimeter edge (3) surrounding an interior part (4) of said second material.

It allows providing a footwear insole that achieves lightness, flexibility, cushioning and an infinity of colors, infinite patterns and infinite textures.

## Description

Method and mold for manufacturing an anatomical footwear insole, and anatomical footwear insole manufactured by means of said method in said mold

### Object of the invention

The present invention refers to a method and a mold for manufacturing an anatomical footwear insole, and to an anatomical footwear insole manufactured by means of said method with said mold, which allows obtaining an anatomical insole in which lightness, flexibility, cushioning and an infinity of colors, infinite patterns and infinite textures are achieved.

### Background of the invention

A type of footwear is known that comprises an anatomical insole made of cork with latex, which adapts to the shape of the user's foot.

Although this type of footwear insole has long fulfilled its function in terms of comfort and aesthetics and its use is commonly widespread, it also presents some drawbacks.

These insoles, made mainly of cork with latex, which hardens upon vulcanizing, turn out to be too rigid and not very flexible when walking and, in addition, not very comfortable for the user when walking.

Anatomical insoles are also known in which cork has been mixed with rubber, which achieve better flexibility, but do not improve their weight.

### Description of the invention

Therefore, an objective of the present invention is to provide a method and a mold for manufacturing an anatomical footwear insole, and an anatomical footwear insole obtained from said method, which allows manufacturing the anatomical footwear insole in the most economical way possible, combining two materials of different densities in the anatomical insole and a sheet, that is, a synthetic fabric or leather, which is in contact with the user's foot.

With the method, the mold and the anatomical footwear insole of the invention, the cited drawbacks are solved, presenting other advantages that will be described below.

The method, the mold and the anatomical footwear insole according to the present invention are described in the corresponding independent claims, and the dependent claims include additional characteristics that are optional.

More specifically, in order to avoid the mentioned problems of the state of the art, the applicant has developed a solution consisting of the use of two thermoplastic materials of different densities, a first material of higher density and a second material of lower density, where the first material with a higher density is situated in the form of a ring, wall or perimeter lateral barrier delimiting the contour of the insole and which serves to contain or house, within said wall, the second material as a core.

Thus, it is achieved that this first material provides rigidity to the assembly and serves, at the same time, as a support structure for the user's weight, while delimiting the zone or space in which the core formed by the second material is found, of lower density and much more abundant, thus achieving both a decrease in weight and an increase in comfort for the user.

However, this structure presented a challenge in its manufacturing phase, since the usual way of doing it known in the state of the art imposed that the second material forming the core be injected first and, over it, the first of higher density along the entire perimeter.

This, however, posed the problem that, the core material being of a lower density than the first, it yielded or retracted when said first was injected over it, preventing a correct vulcanization between both, that is, preventing the pressure of the second material from deforming the complete anterior part between the first and second materials.

For all these reasons, a manufacturing method was developed that also overcame those drawbacks by inverting that usual order of injection of both materials and which is what is described both in the claims and below.

The method for manufacturing an anatomical insole according to the present invention comprises the following steps:
- placing a sheet on a base of a mold comprising an intermediate ring;
- closing the mold, tensioning said sheet on the base of the mold with the intermediate ring;
- injecting a first material into a perimeter ring formed in the mold;
- forming a perimeter edge with the first material, defining a closed interior space;
- injecting a second material into the interior space; and
- vulcanizing the second material, forming a footwear insole comprising the perimeter edge of the first material and an interior part of the second material and the sheet.

Advantageously, the density of the first material is higher than the density of the second material.

According to a preferred embodiment, the first material comprises thermoplastic rubber and poly(styrene-butadiene-styrene).

According to a preferred embodiment, the second material comprises thermoplastic rubber and poly(styrene-butadiene-styrene) in different densities.

Furthermore, the step of injecting the first material can be divided into several sub-steps, performing in each sub-step the injection of the first material only in a section of the perimeter edge.

The mold for manufacturing an anatomical footwear insole according to the present invention comprises:
- a base provided with a cavity for the placement of a first and second materials;
- a first lid comprising a figure complementary to the cavity of the base; and
- at least a second lid for injection of the second material,
wherein the cavity of the base comprises a perimeter ring for the placement of the first material.

The anatomical footwear insole according to the present invention comprises:
- a first and second materials; and
- a sheet;
wherein the first material forms only a perimeter edge surrounding an interior part of said second material.

Advantageously, the density of the first material is higher than the density of the second material.

According to a preferred embodiment, the first material comprises thermoplastic rubber and poly(styrene-butadiene-styrene).

According to a preferred embodiment, the second material comprises thermoplastic rubber and poly(styrene-butadiene-styrene) in different densities.

Furthermore, the perimeter edge can be divided into several sections placed one over the other, being able to combine sections of different colors.

With the method, mold and anatomical footwear insole according to the present invention, it is achieved that the second material, which is preferably less dense than the first material, remains completely adhered to the perimeter edge made of the first material.

Furthermore, when the first material is denser, it does not yield when the second material is injected into the interior space defined by said perimeter edge, withstanding the pressure exerted by the second material, since said first material remains housed inside the perimeter ring formed in the base of the mold.

**In** this way, a less dense material can be used to lighten the weight of the anatomical insole and put denser material on the perimeter edge, but instead of injecting the central part first and then the edge, it is done in reverse, first the material of higher density is injected forming a wall, which in turn is supported by the walls of the mold, and then the central part, which adheres well to the edge because said edge does not yield as it is supported by the walls of the mold.

### Brief description of the drawings

For a better understanding of what has been set forth, some drawings are attached in which, schematically and only by way of non-limiting example, a practical case of embodiment is represented.
Figure 1 is a plan view of the footwear according to the present invention, prior to the trimming of the sheet;
Figure 2 is a perspective view of the anatomical footwear insole according to the present invention, according to an embodiment;
Figure 3 is a perspective view of the interior part of the base of the mold according to the present invention;
Figure 4 is a perspective view of the interior part of the first lid of the mold according to the present invention; and
Figure 5 is a perspective view of the interior part of the second lid of the mold according to the present invention.

### Description of a preferred embodiment

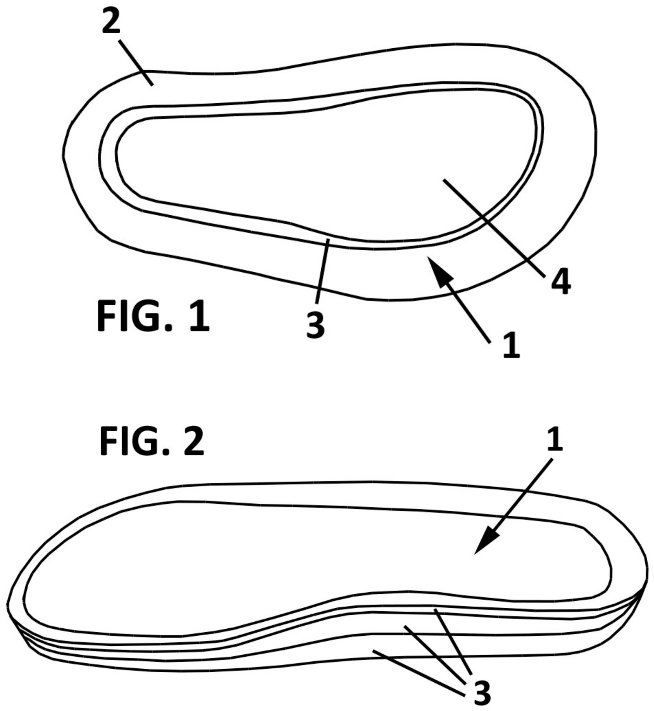

Figure 1 shows a plan view of an anatomical footwear insole according to the present invention, identified generally by the reference number 1, and a sheet (2), for example, formed of a thermoplastic material, fabric, leather or the like. It should be indicated that in this Figure 1 the sheet (2) is untrimmed, that is, it is the sole obtained upon removing it from the mold after the manufacturing method described below and prior to incorporation into a complete footwear or shoe.

The insole (1) comprises a perimeter edge (3) of a first material and an interior part (4) of a second material.

Preferably, the densities of the first and second materials are different, in particular, the density of the first material is higher than the density of the second material.

Solely by way of example, the first material can be a material known as **TR,** that is, it comprises thermoplastic rubber and poly(styrene-butadiene-styrene), although it could be any other suitable material, and the second material with the same characteristics as the first material, but presenting lower density, that is, any other suitable material that allows the joining of the parts of the footwear insole.

Said perimeter edge (3), which is preferably denser than the interior part (4) of the sole, serves as reinforcement for the sole, the interior part (4) being sufficiently flexible and light to ensure the user's comfort.

**It** should be indicated that the perimeter edge (3) can be formed by several sections, not shown in Figure 1, which can be of different colors, or some transparent section and others opaque, or any suitable combination.

The manufacturing method of this anatomical footwear insole is as follows:
First, the sheet (2) is placed in a mold, which will be described below with reference to Figures 2 to 4.

Once the sheet (2) is placed in said mold, the latter closes, tensioning said sheet (2), and then the first material is injected into a perimeter ring (5) formed in the mold.

After injecting the first material, the perimeter edge (3) is formed, said perimeter edge (3) defining a closed interior space.

This interior space is used to inject the second material, which forms the interior part (4) of the footwear insole (1) upon vulcanizing, forming the footwear insole (1) described above comprising a perimeter edge (3) of the first material and an interior part (4) of the second material and the sheet (2).

By forming the perimeter edge (3) first in the perimeter ring (5) of the mold, which can have any suitable shape, and being this preferably of a denser material than the interior part (4) and being contained by the interior wall of the mold, the perimeter edge (3) withstands the pressure of the injection of the second material, without yielding towards the exterior, guaranteeing complete adhesion between the first and second materials.

If it is desired to obtain a perimeter edge formed by two sections, for example to change the color, the step of injection of the first material is divided into two injection sub-steps. That is, first a first section of the perimeter edge (3) defining said interior space can be injected, then over the entirety of this first section a second section of the perimeter edge (3) can be injected.

An embodiment of the anatomical footwear insole according to the present invention is, therefore, with the perimeter edge (3) formed by several sections one over the other, which can be of different colors.

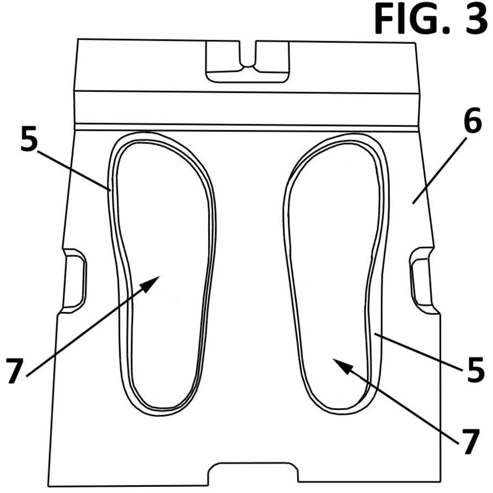

Figures 3 to 5 show the mold according to the present invention, with which the anatomical footwear insole described above can be manufactured by means of the cited method.

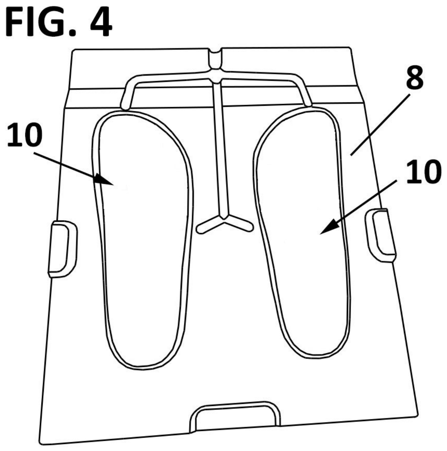

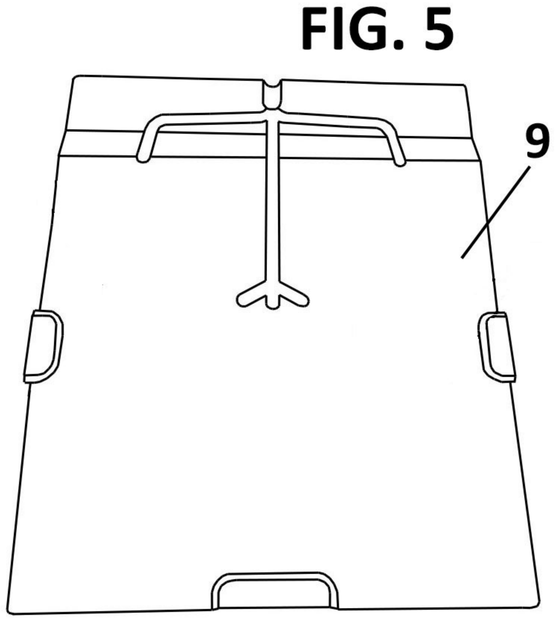

The mold comprises a base (6), shown in Figure 3, which comprises a cavity (7) where said perimeter ring (5) is defined, a first lid (8), shown in Figure 4, and at least a second lid (9), shown in Figure 5.

The first lid (8) comprises a figure (10) complementary to the cavity (7) of the base (6). It should be indicated that if two sub-steps of injection of the second material are performed, each sub-step is performed with a different lid.

## Claims

1. Method for manufacturing an anatomical footwear insole, **characterized in that** it comprises the following steps:
- placing a sheet (2) on a base of a mold comprising an intermediate ring;
- closing the mold, tensioning said sheet (2) on the base of the mold with the intermediate ring;
- injecting a first material into a perimeter ring (5) formed in the mold;
- forming a perimeter edge (3) with the first material, defining a closed interior space;
- injecting a second material into the interior space; and
- vulcanizing the second material, forming an insole (1) comprising the perimeter edge (3) of the first material and an interior part (4) of the second material and the sheet (2).

2. Method for manufacturing an anatomical footwear insole according to claim 1, wherein the density of the first material is higher than the density of the second material.

3. Method for manufacturing an anatomical footwear insole according to claim 1 or 2, wherein the first material comprises thermoplastic rubber.

4. Method for manufacturing an anatomical footwear insole according to any one of the preceding claims, wherein the first material comprises thermoplastic rubber and/or poly(styrene-butadiene-styrene).

5. Method for manufacturing an anatomical footwear insole according to claim 1 or 2, wherein the second material comprises thermoplastic rubber and/or poly(styrenebutadiene-styrene) of lower density than the density of the thermoplastic rubber.

6. Method for manufacturing an anatomical footwear insole according to claim 1, wherein the step of injecting the first material is divided into several sub-steps, performing in each sub-step the injection of the first material only in a section of the perimeter ring (5).

7. Mold for manufacturing an anatomical footwear insole, comprising:
- a base (6) provided with a cavity (7) for the placement of a first and second materials;
- a first lid (8) comprising a figure (10) complementary to the cavity (7) of the base (6);
and
- at least a second lid (9) for injection of the second material,
**characterized in that** the cavity (7) of the base (2) comprises a perimeter ring (5) for the placement of the first material.

8. Anatomical footwear insole, comprising:
- a first and second materials; and
- a sheet (2);
**characterized in that** the first material forms only a perimeter edge (3) surrounding an interior part (4) of said second material.

9. Anatomical footwear insole according to claim 8, wherein the density of the first material is higher than the density of the second material.

10. Anatomical footwear insole according to claim 8 or 9, wherein the first material comprises thermoplastic rubber.

11. Anatomical footwear insole according to any one of claims 8 to 10, wherein the first material comprises poly(styrene-butadiene-styrene).

12. Anatomical footwear insole according to claim 8 or 9, wherein the second material comprises poly(styrene-butadiene-styrene).

13. Anatomical footwear insole according to claim 8, wherein the perimeter edge (3) is divided into several sections, placed one over the other.
